Europäisches Patentamt

European Patent Office

Office européen des brevets

(11) Veröffentlichungsnummer: **0 240 753 B1**

(12) # EUROPÄISCHE PATENTSCHRIFT

(45) Veröffentlichungstag der Patentschrift: **05.08.92**

(21) Anmeldenummer: **87103333.8**

(22) Anmeldetag: **09.03.87**

(51) Int. Cl.⁵: **B29C 67/24**

(54) Verfahren und Vorrichtung zur Herstellung von Kunststoff-Formteilen.

(30) Priorität: **04.04.86 DE 3611249**

(43) Veröffentlichungstag der Anmeldung:
**14.10.87 Patentblatt 87/42**

(45) Bekanntmachung des Hinweises auf die
Patenterteilung:
**05.08.92 Patentblatt 92/32**

(84) Benannte Vertragsstaaten:
**BE DE ES FR GB IT SE**

(56) Entgegenhaltungen:
EP-A- 0 051 252        WO-A-84/03469
DE-A- 1 924 022        DE-A- 1 931 921
DE-A- 3 135 258        FR-A- 2 152 952
US-A- 3 606 640        US-A- 4 501 715
US-A- 4 515 543        US-A- 4 618 322

DER PLASTVERARBEITER, Band 22, Nr. 11,
November 1971, Seiten 780-784; W. HART-
MANN et al.: "Bindenahtfreies Spritzen von
Artikeln mit Durchbrüchen und örtlich dünnen Wandstellen"

(73) Patentinhaber: **PEBRA GmbH Paul Braun**
**Martinstr. 34**
**W-7300 Esslingen(DE)**

(72) Erfinder: **Hüttner, Manfred**
**Lerchenweg 10**
**W-7311 Notzingen(DE)**

(74) Vertreter: **Wolf, Eckhard, Dr.-Ing.**
**Eugensplatz 5 Postfach 13 10 01**
**W-7000 Stuttgart 1(DE)**

## Beschreibung

Die Erfindung betrifft ein Verfahren und eine Vorrichtung zur Herstellung von Kunststoff-Formteilen der im Oberbegriff der Ansprüche 1 bzw. 8 und 23 angegebenen Gattung.

Bei dem sogenannten Reaktions-Injektions-Verfahren zur Herstellung von Kunststoff-Formteilen (RIM-Verfahren = Reaction-Injection-Molding) werden zwei im Ausgangszustand noch flüssige Reaktionskomponenten, wie Polyetherpolyol und Polyisocyanat, mittels Dosierpumpen zu einem Mischkopf gefördert und zu einem Reaktionsgemisch vereinigt. Vom Mischkopf strömt das Reaktionsgemisch über einen Angußkanal in das Formwerkzeug und reagiert dort zu einem festen Werkstoff, z.B. Polyurethan, aus. Um einen wirbelfreien Eintrag des Gemisches zu erreichen, wird die Strömung aus dem zylindrischen Auslaufkanal des Mischkopfes über eine Verteilervorrichtung, die einen Staubalken enthält in eine Spaltströmung übergeführt. Im Bereich des Angußspalts bildet sich ein Filmanguß aus. Der Filmanguß muß je nach Formteil eine bestimmte Breite aufweisen. Bei gefülltem Material, beispielsweise mit einer Glasfaserfüllung, muß auch eine bestimmte Spaltdicke eingehalten werden, um für den Gemischeintrag strömungstechnisch optimale Bedingungen zu schaffen. Bei asymmetrischen Teilegeometrien und der Verwendung von gefüllten Materialien kann auf der dem Anguß gegenüberliegenden Seite zur Vermeidung von Lufteinschlüssen und Flußumkehrungen ein Materialüberlauf erforderlich sein, der ähnlich dem Anguß durch einen engen Spalt geführt wird.

Das am ausgehärteten Formteil angeformte Angußteil muß nach dem Entformen außerhalb des Formwerkzeugs in einem zusätzlichen Arbeitsgang mit Hilfe von Spezialwerkzeugen oder von Hand mit Messern und Schnittschablonen vom Formteil abgetrennt werden. Dieses Abtrennen muß exakt durchgeführt werden, da die Beschnittkontur zugleich die Außenkontur des fertigen Formteils darstellt. Außerdem wird dadurch die Außenhaut des Formteils zerstört, was vor allem bei Schaumstoffteilen mit zelliger Struktur dazu führt, das die Zellen nicht mehr durch die Außenhaut verschlossen sind.

Zur Vermeidung dieser Nachteile ist es bereits bekannt (DE-A-1 931 921, Fig. 6), im Bereich zwischen dem Angußkanal und dem Formnest eine Absperrvorrichtung vorzusehen, die einen in einer Bohrung des Formwerkzeugoberteils verschiebbar geführten Absperrkolben aufweist, der in Schließstellung mit seiner Stirnfläche gegen eine am Unterteil angeordnete Trennwand anliegt. In der Öffnungsstellung des Absperrkolbens ist der Angußkanal über den freigegebenen Bohrungsraum mit dem Formnest verbunden. Das Reaktionsgemisch nimmt diesen Weg vom Mischaggregat in das Formnest. Nach Beendigung des Füllvorgangs schließt der Absperrkolben das Formnest ab, so daß das im Angußkanal befindliche Angußteil vom Formteil abgetrennt wird und nach dem öffnen des Formwerkzeugs unabhängig vom Formteil entfernt werden kann. Der in einer zylindrischen Bohrung geführte Absperrkolben steht beidseitig über die scharfkantig ausgebildete Trennwand über. Dadurch ergibt sich in der Öffnungsstellung ein durch den Bohrungsrand begrenzter Schlitz zwischen dem Kolben und der Trennwand, in welchem das einschießende Reaktionsgemisch scharf umgelenkt wird, was zu einer Verwirbelung und zu Druckdifferenzen im Materialstrom und dadurch bedingt zu Materialunregelmäßigkeiten im Formteil aufgrund der Ausbildung von Lufteinschlüssen und Poren führt. Weiter kommt es dort wegen der Wirbelbildung zu Flußumorientierungen oder gar zur Flußumkehr im Materialstrom, die die Verwendung von Kunststoffmaterialien mit Füllstoffen, wie Glasfasern, wegen der dabei auftretenden Inhomogenitäten in der Ausrichtung der Füllstoffe ungeeignet erscheinen lassen. Ähnliche Schwierigkeiten treten auf der dem Punktanguß gegenüberliegenden Seite des Formwerkzeugs oder auch innerhalb des Formnestes selbst auf, wenn beispielsweise mit Durchbrüchen versehene großflächige Produkte aus gefülltem Material hergestellt werden sollen.

Weiter ist es bei einer Angußvorrichtung für die formgebende Verarbeitung von aus mehreren Komponenten sich bildenden Kunststoffen an sich bekannt (FR-A-2 152 952), durch Erweiterung des Angußkanals in Richtung Formnest eine gleichmäßige Geschwindigkeitsverteilung über den spaltförmigen Querschnitt einzustellen.

Der Erfindung liegt die Aufgabe zugrunde, ein Verfahren und eine Vorrichtung der eingangs angegebenen Art zu entwickeln, womit ein Abtrennen des Angusses und eines eventuellen Überlaufs vom Formteil sowie das Einbringen von Durchbrüchen in das Formteil in einem Arbeitsgang während des Herstellungsvorgangs ermöglicht wird und auch bei großflächigen Formteilen aus gefülltem Kunststoffmaterial ein hohes Maß an Materialhomogenität über das gesamte Formteil gewährleistet ist.

Zur Lösung dieser Aufgabe werden die in den Patentansprüchen 1 bzw. 8 und 23 angegebenen Merkmalskombinationen vorgeschlagen. Weitere vorteilhafte Ausgestaltungen und Weiterbildungen der Erfindung ergeben sich aus den Unteransprüchen.

Die Erfindung geht von dem Gedanken aus, daß der während des Einspritzvorgangs geöffnete Angußspalt unmittelbar nach dem Schußende, solange das Reaktionsgemisch noch flüssig ist, verschlossen wird, so daß das Material aus dem Spaltbereich verdrängt wird. Dabei wird das im Formnest befindliche Material vom Anguß getrennt, so daß ein nachträgliches Beschneiden des entformten Formteils nicht mehr erforderlich ist. Auch der während des Einspritzvorgangs offene Überlaufspalt kann nach dem Schußende - gegebenenfalls mit einer kleinen Zeitverzögerung - unter Verdrängung des darin befindlichen Materials geschlossen werden, so daß der Überlauf vom eigentlichen Formteil schon vor dem Aushärten abgetrennt wird. Schließlich können innerhalb des Formnests Durchtrittsspalte vorgesehen werden, die während des Einspritzvorgangs offen sind und den Materialfluß daher nicht stören, die aber nach dem Schußende - gegebenenfalls mit einer kleinen Zeitverzögerung - unter Verdrängung des darin befindlichen Materials geschlossen werden, so daß sich in dem Formteil je nach Kontur des Verdrängungsbereichs un-terschiedlich gestaltete Durchbrüche erzeugen las-sen. In allen diesen Fällen sorgt der während des Einspritzvorgangs ungestörte Materialfluß für eine homogene Materialverteilung, die beim anschließenden Verdrängungsvorgang erhalten bleibt.

Bei einer vorteilhaften Vorrichtung zur Durchführung des erfindungsgemäßen Verfahrens wird die eine Breitseitenfläche eines engen Angußspalts durch die Stirnfläche eines Verdrängungsschiebers gebildet, die in ihrer Breite und Länge im wesentlichen den entsprechenden Abmessungen der die andere Breitseitenfläche des Angußspalts bildenden Stirnfläche eines Staubalkens für das Reaktionsgemisch entspricht. Ein weiterer quer zu einem Durchtrittsspalt für das Reaktionsgemisch ver-schiebbarer Verdrängungsschieber ist in Strö-mungsrichtung hinter dem Staubalken im Oberteil verschiebbar angeordnet, wobei der Durchtrittsspalt durch Verschieben des betreffenden Verdrängungsschiebers gegen die gegenüberliegende Breitseitenfläche des Durchtrittsspalts unter Materialverdrängung verschließbar ist.

Gemäß einer bevorzugten Ausgestaltung der Erfindung ist ein weiterer Verdrängungsschieber auf der dem Angußspalt gegenüberliegenden Seite des Formwerkzeugs angeordnet und begrenzt dort einen langgestreckten Überlaufspalt, der mit Hilfe des Verdrängungsschiebers unter Verdrängung des darin befindlichen Materials und Abtrennung des Überlaufteils vom Formteil geschlossen werden kann. Der Überlaufspalt kann dabei nach außen hin mit einer Überlaufkammer verbunden sein, in der das beim Einspritzvorgang überlaufende Material sich sammelt und als vom Formteil abgetrenntes Überlaufteil aushärtet.

Gemäß einer weiteren bevorzugten Ausgestaltung der Erfindung ist innerhalb des Formnests mindestens ein durch einen der weiteren Verdrän-gungsschieber unter Bildung eines Materialdurch-bruchs im Formteil verschiebbarer Durchtrittsspalt für das Reaktionsgemisch angeordnet. Der Verdrängungsschieber weist dabei eine der Umrißgestalt des zu bildenden Materialdurchbruchs entsprechende Querschittsform sowie eine der Oberflächenform der gegenüberliegenden, am Unterteil befindlichen Begrenzungsfläche des Durchtrittspalts entsprechende Stirnflächenform auf.

Vorteilhafterweise kann vor allem im Bereich des Angußspalts, aber auch im Bereich des Überlaufspalts und/oder des Durchtrittsspalts eine Verdrängungskammer zur Aufnahme des durch den Verdrängungsschieber verdrängten Materials angeordnet werden. Diese Vorkehrung ist vor allem bei niedrigen Schußgewichten von Vorteil, bei denen innerhalb des Formnests und einer eventuellen Überlaufkammer nicht genügend Raum zur Aufnahme des verdrängten Materials vorhanden ist. Die Verdrängungskammern sind vorzugsweise im Unterteil angeordnet und zum betreffenden Spalt hin offen. Das Aufnahmevolumen der Verdrängungskammern ist zweckmäßig durch einen synchron mit dem Verdrängungsschieber hydraulisch betätigbaren Kolben veränderbar.

Gemäß einer weiteren vorteilhaften Ausgestaltung der Erfindung ist die dem Verdrängungsschieber gegenüberliegende Breitseitenfläche des Anguß- und/oder Überlaufspalts an einer am Ober-teil angelenkten Entformklappe angeordnet. Beson-ders zweckmäßig ist es, wenn der Verdrängungsschieber als solcher zugleich als über die Oberfläche des Werkzeugoberteils hinaus verschiebbare Entformhilfe ausgebildet ist.

Die erfindungsgemäßen Maßnahmen haben den Vorteil, daß ein zusätzlicher Arbeitsgang für das Abtrennen des Angußfilms und des Überlaufsfilms entfällt oder durch einen einfacheren und daher billigeren Arbeitsgang, wie Schmirgeln, ersetzt werden kann. Dadurch entfallen auch nicht unerhebliche Investitionen für Spezialwerkzeuge und Schneidschablonen. Ausschuß durch falsches oder fehlerhaftes Beschneiden im Anguß- und Überlaufbereich tritt nicht mehr auf. Außerdem wird die Außenhaut des Formteils nicht zerstört, was vor allem bei Teilen mit offenzelliger Materialstruktur von Vorteil ist. Bei der Durchbruchbildung wird darüber hinaus vermieden, daß es zur Ausbildung von Zusammenfließnähten auf der stromabliegenden Seite des Durchbruchs, zur Ausbildung von Lufteinschlüssen und Poren aufgrund einer Wirbel-bildung und einer unterschiedlichen Druckausbil-dung entlang der Durchbruchkontur und zu einer Umorientierung von Füllstoffen und damit zu einem Verzug im Bereich der Durchbrüche kommen kann.

Im folgenden wird die Erfindung anhand der Zeichnung näher erläutert. Es zeigen

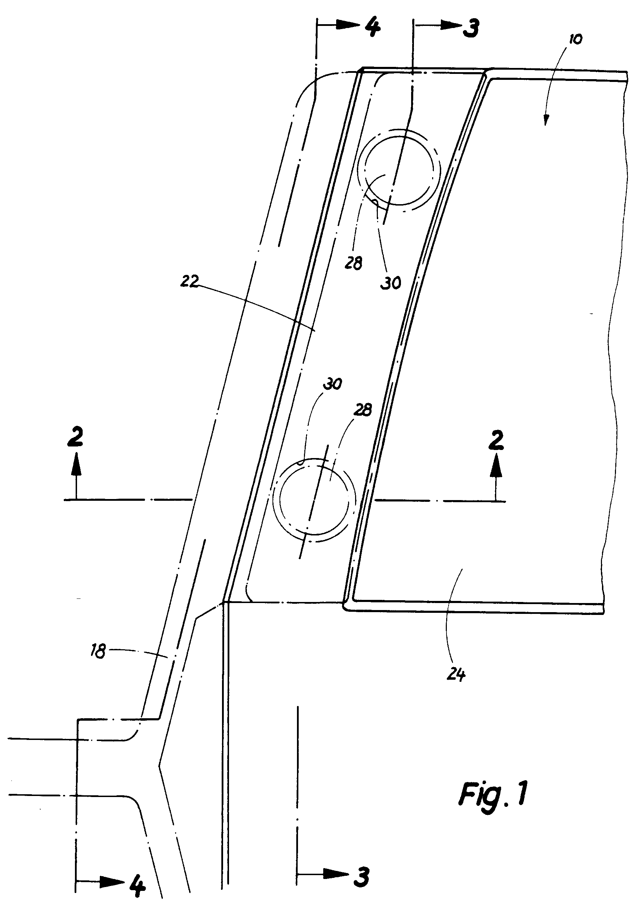

Fig. 1            eine Draufsicht auf den Angußbereich eines Formwerkzeugs;

Fig. 2a bis c       einen senkrechten Schnitt entlang der Schnittlinie 2-2 der Fig. 1 in drei verschiedenen Stellungen des Verdrängungsschiebers;

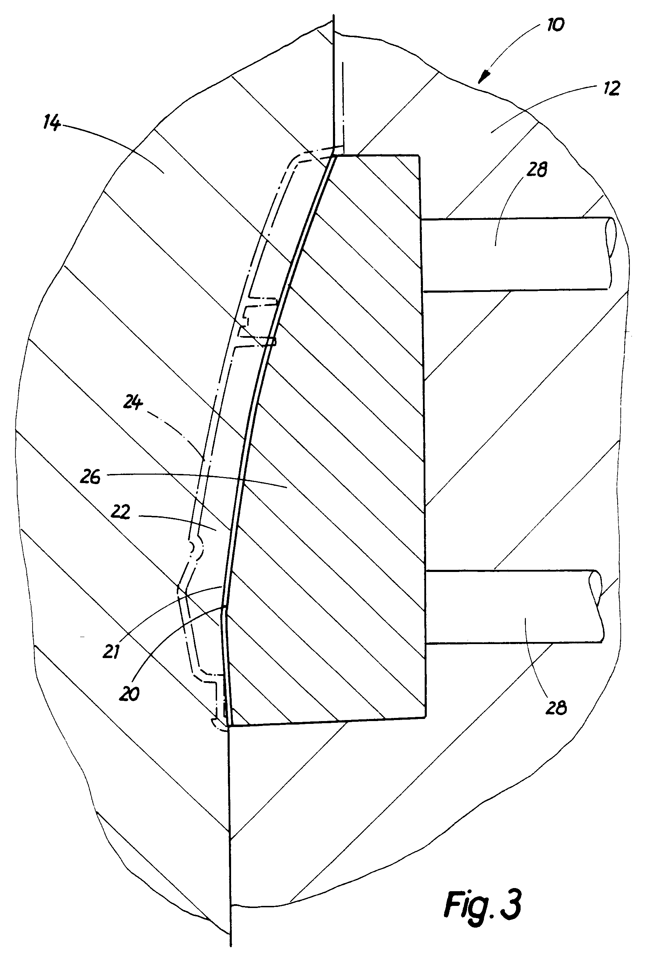

Fig. 3 einen Schnitt entlang der Schnittlinie 3-3 der Fig. 1;

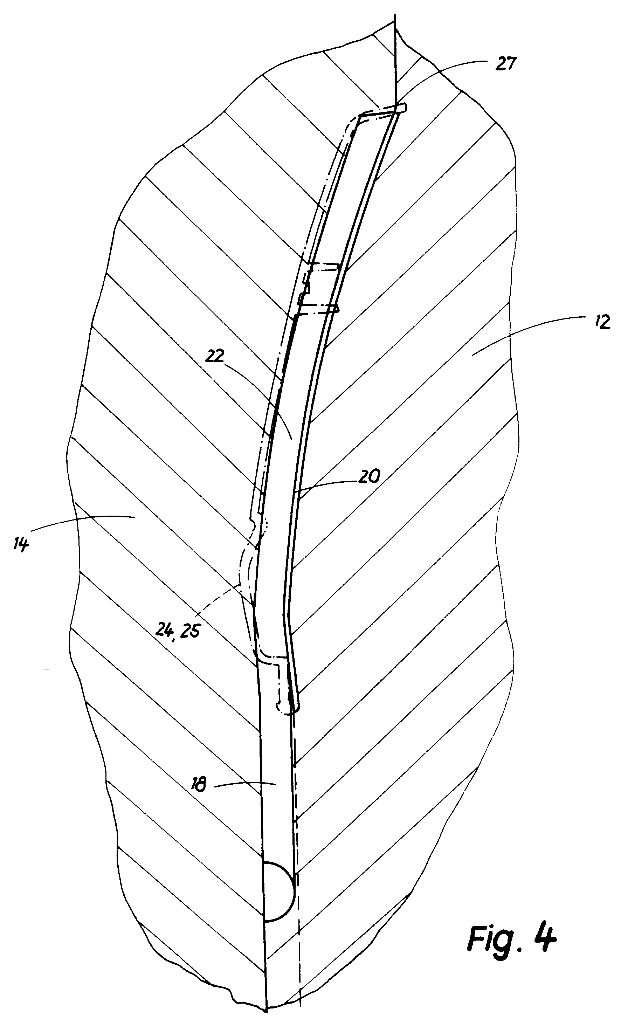

Fig. 4 einen Schnitt entlang der Schnittlinie 4-4 der Fig. 1

Fig. 5 einen senkrechten Schnitt durch den Überlaufbereich eines Formwerkzeugs;

Fig. 6 ein Schaltschema für die elektrohydraulische Ansteuerung der Verdrängungsschieber;

Fig. 7a und b einen senkrechten Schnitt durch ein Formwerkzeug im Bereich des Formnests mit einem Verdrängungsschieber für die Herstellung von Durchbrüchen im Formteil in zwei verschiedenen Stellungen;

Fig. 8 ein Ausführungsbeispiel eines mit dem Werkzeug gemäß Fig. 7a und 7b hergestellten Kunststoff-Formteils mit Durchbrüchen in schaubildlicher Darstellung;

Fig. 9a und b einen senkrechten Schnitt durch den Angußbereich eines Formwerkzeugs mit Verdrängungsschieber und Verdrängungskammer in zwei verschiedenen Stellungen.

Das in der Zeichnung schematisch dargestellte Formwerkzeug 10 besteht im wesentlichen aus zwei gegeneinander verschiebbaren und/oder verschwenkbaren Teilen, dem Oberteil 12 und dem Unterteil 14. Das Formwerkzeug wird bei geschlossenem Ober- und Unterteil durch einen nicht dargestellten Mischkopf über einen Angußkanal 18 und einen Angußspalt 20 mit einem aus zwei Reaktionskomponenten, wie Polyetherpolyol und Polyisocyanat, bestehenden Reaktionsgemisch in flüssigem Zustand beaufschlagt. Das Reaktionsgemisch gelangt über den Angußspalt 20 in das Formnest 24 und breitet sich dort während der relativ kurzen Schußzeit bis zum Überlaufspalt 42 und zur Überlaufkammer 44 aus.

Der Angußspalt 20 ist auf der einen Seite durch die Breitseitenfläche des am Unterteil angeformten Staubalkens 22 und auf der anderen Seite durch die Stirnfläche eines Verdrängungsschiebers 26 begrenzt. Der Verdrängungsschieber 26 erstreckt sich über die gesamte Breite des Angußspalts 20 und ist im Oberteil 12 mit Stößeln 28 in entsprechenden Führungen 30 quer zum Angußspalt 20 verschiebbar angeordnet.

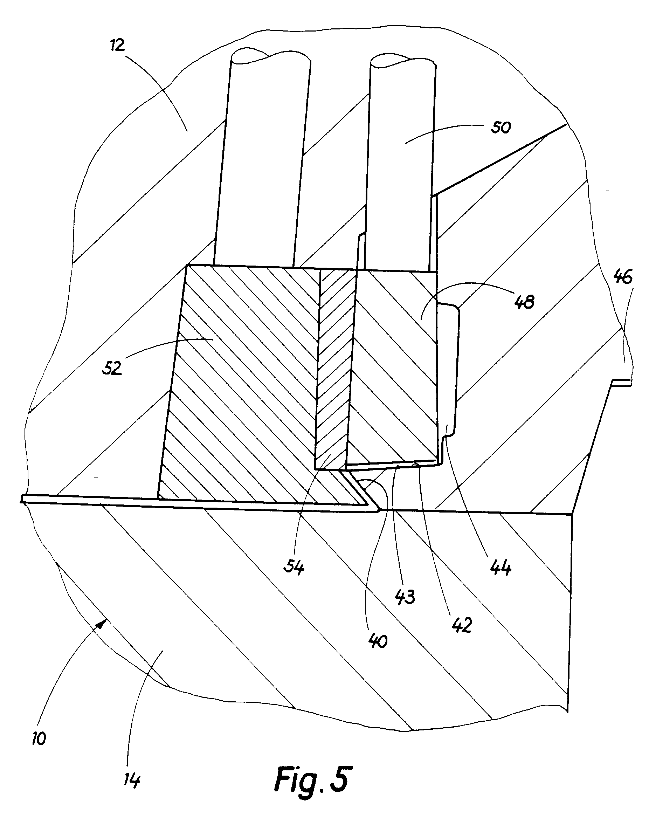

Auf der Überlaufseite des Formwerkzeugs befindet sich ein weiterer im Oberteil 12 verschiebbar angeordneter Verdrängungsschieber 48, der den Überlaufspalt 42 mit seiner Stirnfläche nach oben hin begrenzt und der sich über die gesamte Spaltbreite erstreckt. Bei dem in Fig. 5 gezeigten Ausführungsbeispiel befindet sich im rückwärtigen Teil des Formnests 24 ein Hinterschnitt 40, so daß zusätzlich eine als Schieber ausgebildete Entformhilfe 52 notwendig ist, die über einen Gleitbacken 54 gegen die benachbarte Seitenfläche des Verdrängungsschiebers 48 gleitend anliegt. Die dem Verdrängungsschieber gegenüberliegende Breitseitenfläche des Überlaufspalts 42 ist an einer am Oberteil 12 angelenkten Entformklappe 46 angeordnet.

Das Formnest 24 bildet einen engen Reaktionsraum für die Herstellung eines dünnwandigen kastenförmigen Formteils 25. Der angußseitige Verdrängungsschieber 26 weist auf der dem Formnest zugewandten Seite eine der benachbarten Kante des Staubalkens 22 entsprechende Kontur auf und steht mit seiner Stirnfläche geringfügig um ein im wesentlichen der Wandstärke des Formteils entsprechendes Maß über die Staubalkenkante über. Entsprechendes gilt für den überlaufseitigen Verdrängungsschieber 48, der auf der dem Formnest zugewandten Seite in den Bereich der Randkante des Formteils 25 übersteht. Mit diesen Maßnahmen wird eine saubere Begrenzung und Abtrennung des dünnwandigen Formteils 25 vom Anguß- bzw. Überlaufteil gewährleistet.

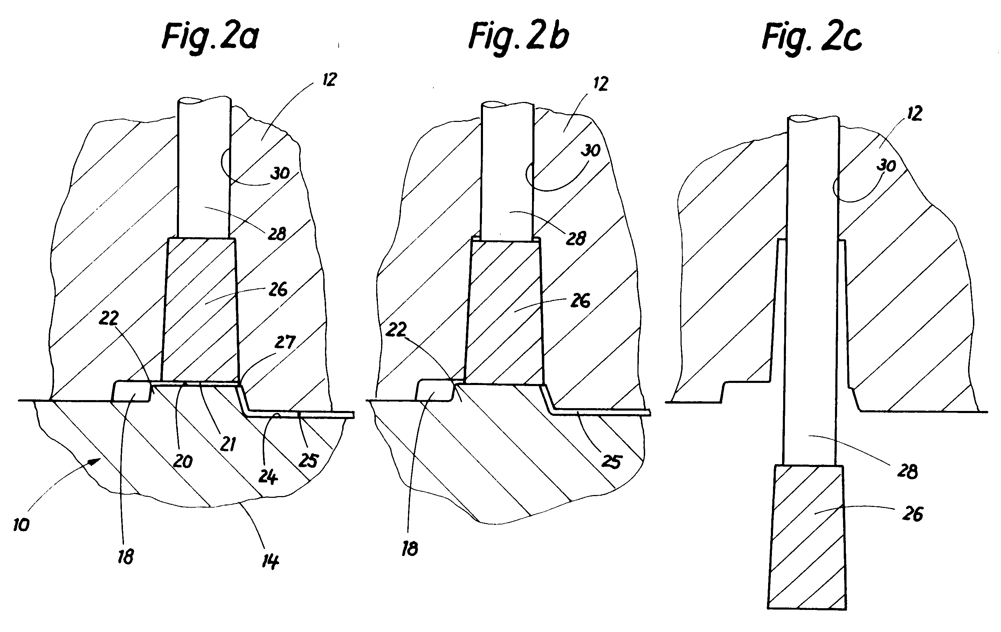

Während des Einspritzvorgangs befinden sich die Verdrängungsschieber 26 und 48 unter Freigabe des Angußspalts 20 und des überlaufspalts 42 in ihrer in das Oberteil 12 zurückgezogenen Stellung (Fig. 2a und Fig. 5), so daß das Reaktionsgemisch über den Angußspalt 20 in das Formnest 24 eindringen und sich dort ausbreiten kann, bis es über den Überlaufspalt 42 in die Überlaufkammer 44 austritt. Unmittelbar im Anschluß an den Einspritzvorgang am Ende der Schußzeit wird zunächst der Verdrängungsschieber 26 in die in Fig. 2b gezeigte Lage verschoben, in der er mit seiner Stirnfläche gegen die Breitseitenfläche des Staubalkens 22 gedrückt wird. Dabei wird das im Angußspalt befindliche, den Angußfilm 21 bildende Material noch im flüssigen Zustand in das Formnest 24 verdrängt. Da die Trennebene 27 des Formnests 24 mit der Spaltebene fluchtet, wird auf diese Weise der Angußfilm 21 vom Formteil 25 sauber abgetrennt.

Kurze Zeit nach dem Verdrängungsvorgang im Angußbereich wird auch der Verdrängungsschieber 48 im Überlaufbereich gegen die gegenüberliegende Breitseitenfläche des Überlaufspalts 42 verschoben, so daß der im Spalt 42 befindliche Überlauffilm 43 in das Formnest 24 und/oder die Überlaufkammer 44 verdrängt wird. Dabei wird der Überlauffilm 43 an der vorgeschriebenen Trennlinie vom Formteil 25 sauber abgetrennt.

Die Abtrennung des Angusses und des Überlaufs erfolgt noch vor dem Ende der Startzeit, die vom Beginn des Vermischens des Reaktionskomponenten bis zum Einsetzen der Reaktion benötigt wird. Die Verfestigung des Formteils 25 erfolgt also schon bei abgetrenntem Anguß und Überlauf, so daß nach Beendigung der Formstandzeit und Öffnen des Formwerkzeugs 10 das Formteil 25 und die bereits abgetrennten Anguß- und Überlaufsteile entnommen werden können. Zur Erleichterung der Teileentfernung kann der Verdrängungsschieber 26 in die in Fig. 2c gezeigte Lage verschoben werden, in der er aus dem Oberteil 12 herausragt. In dieser Lage ist erforderlichenfalls auch eine Reinigung des Verdrängungsschiebers 26 möglich, bevor er wieder in die in Fig. 2a gezeigte Ausgangsstellung zurückgezogen wird. Entsprechendes gilt auch für den Verdrängungsschieber 48 und die Entformhilfe 52.

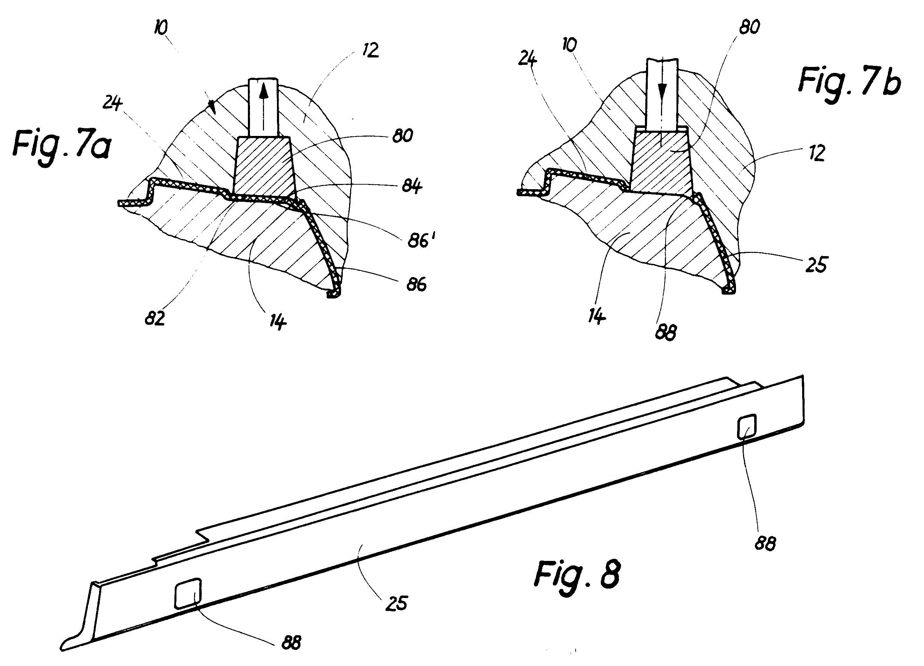

Im Falle des in Fig. 7a und b gezeigten Ausführungsbeispiels ist im Oberteil 12 des Formwerkzeugs 10 ein weiterer Verdrängungsschieber 80 verschiebbar angeordnet, der mit seiner Stirnfläche 82 innerhalb des Formnests 24 gegen die Oberfläche des Unterteils 14 verschiebbar ist. In der zurückgezogenen Stellung gemäß Fig. 7a begrenzen die Stirnfläche 82 des Verdrängungsschiebers 80 einerseits und die gegenüberliegende Oberfläche des Unterteils 14 andererseits einen mit den benachbarten Bereichen des Formnests 24 fluchtenden Durchtrittspalt 84 für das in das Werkzeug eingespritzte Reaktionsgemisch 86. Das Reaktionsgemisch kann sich somit durch den betreffenden Spalt 84 hindurch ungestört ausbreiten, ohne daß es dabei zu einer Wirbelbildung kommt. Wird nun nach Abschluß der Schußzeit aber noch vor Ablauf der Startzeit der Verdrängungsschieber 80 im Sinne der Fig. 7b gegen die Oberfläche des Unterteils 14 verschoben, so wird das noch flüssige Material 86' aus dem Durchtrittspalt 84 in die benachbarten Formnestbereiche verdrängt. Das Verdrängungsvolumen kann bei der anfänglichen Festlegung des Schußgewichts berücksichtigt werden, so daß im Formnest noch Platz für das aus dem Durchtrittspalt verdrängte Material 86' bleibt. Durch die Materialverdrängung wird im Formteil 25 ein Durchbruch 88 gebildet, dessen Umrißgestalt durch die Querschnittsform des Verdrängungsschiebers 80 vorgegeben wird. Um eine vollständige Verdrängung des im Spalt 84 befindlichen Materials zu gewährleisten, ist die Stirnflächenform des Verdrängungsschiebers 80 der Oberflächenform des benachbarten Unterteils 14 angepaßt.

In Fig. 8 ist ein Ausführungsbeispiels eines Formteils 25 dargestellt, das mit einem Formwerkzeug 10 entsprechend den Figuren 7a und 7b im Zuge des Herstellungsvorgangs mit Durchbrüchen 88 versehen wurde.

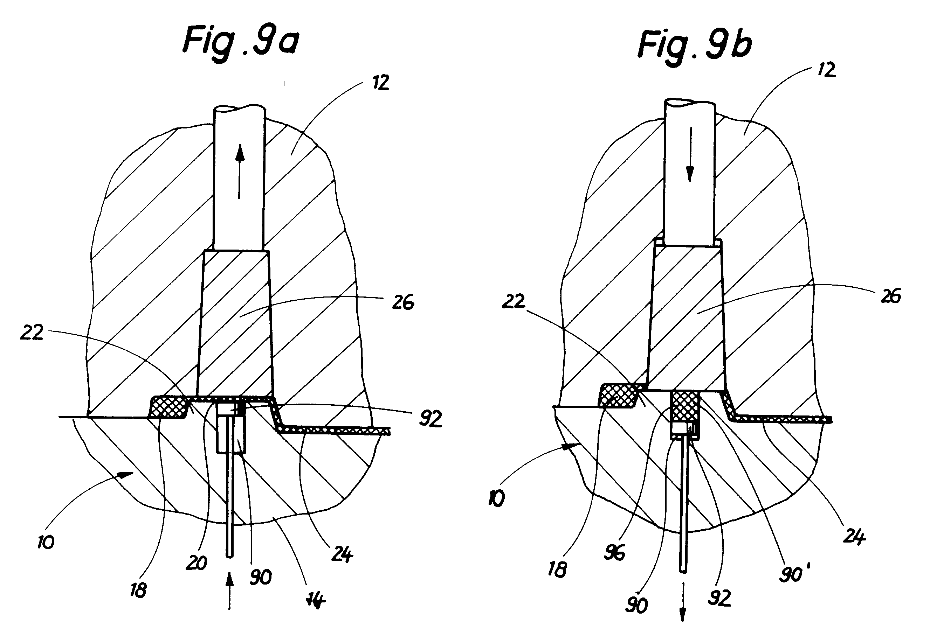

Das Ausführungsbeispiel nach Fig. 9a und b zeigt den Angußbereich eines Formwerkzeugs mit einem den Angußspalt 20 begrenzenden Verdrängungsschieber 26 im Oberteil 12 sowie einer Verdrängungskammer 90' im Bereich des Staubalkens 22 des Unterteils 14. Die Verdrängungskammer 90' ist Bestandteil eines zum Angußspalt 20 hin offenen Zylinders 90, in welchem ein Kolben 92 mit Hilfe eines nicht dargestellten Hydraulikzylinders synchron mit dem Verdrängungsschieber 26 verschiebbar angeordnet ist. In der in Fig. 9a gezeigten zurückgezogenen Stellung des Verdrängungsschiebers 26 ist der Angußspalt 20 für den Durchtritt des einzuspritzenden Reaktionsgemisches offen. In dieser Stellung befindet sich der Kolben 92 in dem Zylinder 90 in seiner nach oben verschobenen Lage, in der seine Stirnfläche mit der übrigen Breitseitenfläche des Staubalkens 22 fluchtet. Beim Verdrängungsvorgang werden der Verdrängungsschieber 26 und der Kolben 92 in die in Fig. 9b gezeigte Stellung in der Weise verschoben, daß das aus dem Angußspalt 20 verdrängte Material 96 in die durch den niedergehenden Kolben 92 sich bildende Verdrängungskammer 90' gelangt. In der betreffenden Endstellung ist die Verdrängungskammer 90' sowohl vom Angußkanal 18 als auch vom Formnest 24 vollständig getrennt. Das darin befindliche Kunststoffmaterial 96 härtet daher als separates Teil aus und wird nach Beendigung der Formstandzeit und Öffnen des Formwerkzeugs 10 durch den nach oben gehenden Kolben 92 ausgestoßen.

Die Verwendung von Verdrängungskammern ist vor allem bei Formwerkzeugen für kleine Schußgewichte von Vorteil, bei denen das zu verdrängende Material 96 einen nicht unerheblichen Anteil des Gesamtvolumens annimmt. Grundsätzlich ist es möglich, Verdrängungskammern auch im Bereich der weiteren Verdrängungsschieber 48,80 anzuordnen.

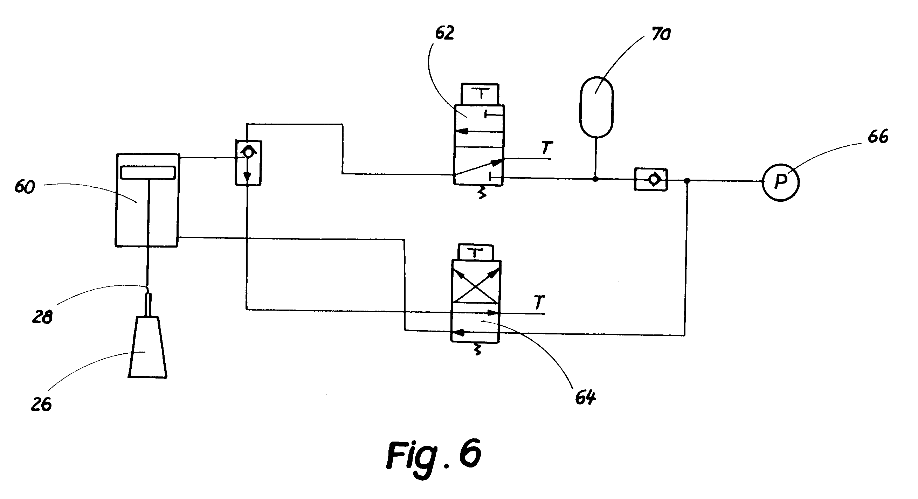

Wie in Fig. 6 gezeigt ist, erfolgt die Betätigung der Verdrängungsschieber 26,48,80 über doppeltwirkende Hydraulikzylinder 60, die über eine Pumpe 66 und einen Druckspeicher 70 nach Maßgabe der Stellung der beiden elektromagnetischen Ventile 62,64 in der einen oder anderen Richtung mit Hydraulikflüssigkeit beaufschlagbar sind. Der Druckspeicher 70 dient zur Unterstützung eines schnellen Bewegungsablaufs in Vorschubrichtung der Verdrängungsschieber 26,48,80.

**Patentansprüche**

1. Verfahren zum Herstellen von Kunststoff-Formteilen, bei weichem mindestens zwei Reaktionskomponenten im flüssigen Zustand vermischt, über einen Angußkanal (18) in ein Formnest (24) eines Formwerkzeugs (12, 14) innerhalb einer vorgegebenen Schußzeit eingespritzt und dort zum Zwecke des Aushärtens und/oder Ausschäumens unter Bildung des Formteils (25) zur Reaktion gebracht werden, und bei welchem ein im Angußkanal (18) gebildetes Angußteil nach Ablauf der Schußzeit vom Formteil (25) abgetrennt wird, **dadurch gekennzeichnet,** daß ein in einem den Angußkanal (18) mit dem Formnest (24) verbindenden, laminar durchströmten Angußspalt (20) gebildeter Angußfilm (21) noch vor Ablauf der vom Zeitpunkt des Vermischens bis zum Reaktionsbeginn benötigten Startzeit aus dem Angußspalt (20) unter Trennung des im Formnest (24) befindlichen Materials vom Anguß aus dem Angußspalt (20) verdrängt wird, und daß in Strömungsrichtung des Reaktionsgemischs hinter dem Angußspalt (20) nach Ablauf der Schußzeit aber noch vor Ablauf der Startzeit weiteres Material aus dem Reaktionsgemisch verdrängt und abgetrennt wird.

2. Verfahren nach Anspruch 1, **dadurch gekennzeichnet,** daß das weitere Material kurze Zeit nach dem Verdrängen des Angußfilms (21) aus dem Reaktionsgemisch verdrängt wird.

3. Verfahren nach Anspruch 1, **dadurch gekennzeichnet,** daß das weitere Material gleichzeitig mit dem Verdrängen des Angußfilms (21) aus dem Reaktionsgemisch verdrängt wird.

4. Verfahren nach einem der Ansprüche 1 bis 3, **dadurch gekennzeichnet,** daß das Reaktionsgemisch auf der dem Angußspalt (20) gegenüberliegenden Seite des Formwerkzeugs (12,14) in einen Überlaufspalt (42) und gegebenenfalls eine Überlaufkammer (44) eingeleitet wird, und daß der das weitere Material bildende, im Überlaufspalt (42) befindliche Überlauffilm (43) durch Materialverdrängung aus dem Überlaufspalt (42) vom Formteil (25) abgetrennt wird.

5. Verfahren nach einem der Ansprüche 1 bis 4, **dadurch gekennzeichnet,** daß das weitere Material innerhalb des Formnests (24) unter Bildung eines Formteildurchbruchs (88) partiell verdrängt wird.

6. Verfahren nach einem der Ansprüche 1 bis 5, **dadurch gekennzeichnet,** daß das Material aus dem Angußspalt (20) und/oder das weitere Material aus dem Formnest (24) oder dem Überlaufspalt (42) in eine sich im Zeitpunkt der Materialverdrängung ausbildende oder öffnende Verdrängungskammer (90') hinein verdrängt und nach dem Aushärten aus dieser ausgeworfen wird.

7. Verfahren nach Anspruch 6, **dadurch gekennzeichnet,** daß die Verdrängungskammer (90') in unmittelbarer räumlicher Nähe des Bereichs angeordnet ist, in welchem das Material verdrängt wird.

8. Vorrichtung zur Herstellung von Kunststoff-Formteilen, in welcher mindestens zwei Reaktionskomponenten in flüssigem Zustand unter Bildung eines Reaktionsgemisches mischbar und über einen Angußkanal (18) in ein Formnest (24) eines aus einem Oberteil (12) und einem Unterteil (14) bestehenden Formwerkzeugs einspritzbar und dort unter Bildung des Formteils (25) und eines Angußteils aushärtbar sind, und in welcher im Bereich zwischen dem Angußkanal (18) und dem Formnest (24) ein im Oberteil verschiebbar angeordnetes, mit seiner Stirnfläche gegen eine Trennwand (22) des Unterteils (14) andrückbares Absperrorgan (26) zur Abtrennung des im Angußkanal (18) gebildeten Angußteils von Formteil (25) angeordnet ist, **dadurch gekennzeichnet,** daß das Absperrorgan als mit seiner Stirnfläche die eine Breitseitenfläche eines engen Angußspalts (20) bildender Verdrängungsschieber (26) ausgebildet ist, daß die Stirnfläche des Verdrängungsschiebers (26) in ihrer Breite und Länge im wesentlichen den entsprechenden Abmessungen der die andere Breitseitenfläche des Angußspalts bildenden Stirnfläche der einen Staubalken (22) für das Reaktionsgemisch bildenden Trennwand entspricht, daß in Strömungsrichtung hinter dem Staubalken (22) im Oberteil (12) mindestens ein weiterer, quer zu einem Durchtrittsspalt (42,84) für das Reaktionsgemisch verschiebbarer Verdrängungsschieber (48,80) angeordnet ist, und daß der Durchtrittsspalt (42,84) durch Verschieben des betreffenden Verdrängungsschiebers (48,80) gegen die gegenüberliegende Breitseitenfläche des Durchtrittsspalts unter Materialverdrängung verschließbar ist.

9. Vorrichtung nach Anspruch 8, **dadurch gekennzeichnet,** daß der den Durchtrittsspalt (42,84) begrenzende Verdrängungsschieber (48,80) synchron mit dem den Angußspalt (20) begrenzenden Verdrängungsschieber (26) hydraulisch ansteuerbar ist.

10. Vorrichtung nach Anspruch 8, **dadurch gekennzeichnet,** daß der den Durchtrittsspalt (42,84) begrenzende Verdrängungsschieber (48,80) mit geringer Zeitverzögerung gegenüber dem den Angußspalt (20) begrenzenden Verdrängungsschieber (26) hydraulisch ansteuerbar ist.

11. Vorrichtung nach einem der Ansprüche 8 bis 10, **dadurch gekennzeichnet,** daß auf der dem Angußspalt (20) gegenüberliegenden Seite des Formwerkzeugs ein Überlaufspalt (42) angeordnet ist, und daß die eine Breitseitenfläche des Überlaufspalts (42) durch die Stirnfläche eines quer zum Überlaufspalt gegen die andere Breitseitenfläche verschiebbaren Verdrängungsschiebers (48) gebildet ist.

12. Vorrichtung nach Anspruch 11, **dadurch gekennzeichnet,** daß der Überlaufspalt (42) nach außen hin mit einer Überlaufkammer (44) verbunden ist.

13. Vorrichtung nach einem der Ansprüchw 8 bis 12**, dadurch gekennzeichnet,** daß innerhalb des Formnests (24) mindestens ein durch einen weiteren Verdrängungsschieber (80) unter Bildung eines Materialdurchbruchs (88) im Formteil (25) verschließbarer Durchtrittsspalt (84) für das Reaktionsgemisch (86) angeordnet ist, wobei der Verdrängungsschieber (80) eine der Umrißgestalt des zu bildenden Materialdurchbruchs (88) entsprechende Querschnittsform sowie eine der Oberflächenform der gegenüberliegenden, vorzugsweise am Unterteil (14) befindlichen Breitseitenfläche des Durchtrittsspalts (84) entsprechende Stirnflächenform (82) aufweist.

14. Vorrichtung nach einem der Ansprüche 8 bis 13, **dadurch gekennzeichnet,** daß im Bereich des Angußspalts (20) und/oder des Überlaufsspalts (42) und/oder des Durchtrittsspalts (84) eine Verdrängungskammer (90') zur Aufnahme des durch den Verdrängungsschieber (26) verdrängten Materials (96) angeordnet ist.

15. Vorrichtung nach Anspruch 14, **dadurch gekennzeichnet,** daß die vorzugsweise im Unterteil (14) angeordnete Verdrängungskammer (90') zum betreffenden Spalt (20) hin offen ist und ein durch einen synchron mit dem Verdrängungsschieber (26) hydraulisch bestätigbaren Kolben (92) veränderbares Aufnahmevolumen für das verdrängte Material (96) aufweist.

16. Vorrichtung nach einem der Ansprüche 8 bis 15, **dadurch gekennzeichnet,** daß der Angußkanal (18) und der Staubalken (22) unterhalb der Trennebene des im Formnest (24) befindlichen Formteils (25) angeordnet ist, und daß der Angußspalt eine im Bereich der Trennlinie (27) mit der Formteilkontur fluchtende Ebene bildet.

17. Vorrichtung nach einem der Ansprüche 8 bis 16, **dadurch gekennzeichnet,** daß die dem Verdrängungsschieber (48) gegenüberliegende Breitseitenfläche des Anguß- und/oder Überlaufspalts (42) an einer am Oberteil (12) angelenkten Entformklappe (46) angeordnet ist.

18. Vorrichtung nach einem der Ansprüche 8 bis 17, **dadurch gekennzeichnet,** daß der Verdrängungsschieber (26) zugleich als über die Oberfläche des betreffenden Werkzeugteils hinaus verschiebbare Entformhilfe ausgebildet ist.

19. Vorrichtung nach einem der Ansprüche 8 bis 18, **dadurch gekennzeichnet,** daß zusätzlich ein als Entformhilfe (52) dienender Schieber vorgesehen ist.

20. Vorrichtung nach Anspruch 19, **dadurch gekennzeichnet,** daß die im Bereich eines Hinterschnitts (40) angeordnete Entformhilfe (52) mit einem Gleitbacken (54) gegen den benachbarten Verdrängungsschieber (48) gleitend anliegt.

21. Vorrichtung nach einem der Ansprüche 8 bis 20**, dadurch gekennzeichnet,** daß der Verdrängungsschieber (26,48) durch einen Hydraulikzylinder (60) verschiebbar ist, der zur Unterstützung eines schnellen Bewegungsablaufs über einen vorgespannten Druckspeicher (70) mit Hydraulikflüssigkeit beaufschlagbar ist.

22. Vorrichtung nach einem der Ansprüche 8 bis 21, **dadurch gekennzeichnet,** daß das Formnest zur Herstellung eines dünnwandigen kastenförmigen Formteils (25) bestimmt ist, dessen Randkante während des Aushärtens in einer mit der staubalkenseitigen Begrenzungsfläche fluchtenden Trennebene (27) liegt, daß der Verdrängungsschieber (26) auf der dem Formnest zugewandten Seite eine der benachbarten Kante des Staubalkens (22) entsprechende Kontur aufweist und mit seiner Stirnfläche geringfügig, höchstens um ein der Wandstärke des Formteils im Bereich der Randkante entsprechendes Maß über die Staubalkenkante übersteht und dabei die Randkante zumindest teilweise übergreift.

23. Vorrichtung zur Herstellung von Kunststoff-Formteilen, in welcher mindestens zwei Reaktionskomponenten in flüssigem Zustand unter Bildung eines Reaktionsgemisches mischbar und über einen Angußkanal (18) in ein Formnest (24) eines aus einem Oberteil (12) und einem Unterteil (14) bestehenden Formwerkzeugs einspritzbar und dort unter Bildung des Formteils (25) und eines Angußteils aushärtbar sind, und in welcher im Bereich zwischen dem Angußkanal (18) und dem Formnest (24) ein im Oberteil verschiebbar angeordnetes, mit seiner Stirnfläche gegen eine Trennwand (22) andrückbares Absperrorgan (26) zur Abtrennung des im Angußkanal (18) gebildeten Angußteils vom Formteil (25) angeordnet ist, **dadurch gekennzeichnet,** daß das Absperrorgan als mit seiner Stirnfläche die eine Begrenzungsfläche eines engen Angußspalts (20) bildender Verdrängungsschieber (26) ausgebildet ist, daß die Stirnfläche des Verdrängungsschiebers (26) in ihrer Breite und Länge im wesentlichen den entsprechenden Abmessungen der die andere Begrenzungsfläche des Angußspalts bildenden Stirnfläche der einen Staubalken (22) für das Reaktionsgemisch bildenden Trennwand entspricht, daß das Formnest zur Herstellung eines dünnwandigen kastenförmigen Formteils (25) bestimmt ist, dessen Randkante während des Aushärtens in einer mit der staubalkenseitigen Begrenzungsfläche fluchtenden Trennebene (27) liegt, daß der Verdrängungsschieber (26) auf der dem Formnest zugewandten Seite eine der benachbarten Kante des Staubalkens (22) entsprechende Kontur aufweist und mit seiner Stirnfläche geringfügig, höchstens um ein der Wandstärke des Formteils im Bereich der Randkante entsprechendes Maß über die Staubalkenkante übersteht und dabei die Randkante zumindest teilweise übergreift.

24. Vorrichtung nach Anspruch 22 oder 23, **dadurch gekennzeichnet,** daß auf der dem Angußspalt (20) gegenüberliegenden Seite des Formwerkzeugs ein Überlaufspalt (42) angeordnet ist, daß die eine Begrenzungsfläche des Übelaufspalts (42) durch die Breitseitenfläche eines an einem der Formwerkzeuge angeordneten Balkens gebildet ist und daß die andere Begrenzungsfläche des Überlaufspalts (42) durch die Stirnfläche eines quer zum Überlaufspalt gegen die erste Begrenzugnsfläche verschiebbaren Verdrängungsschiebers (48) gebildet ist, daß die Stirnfläche des Verdrängungsschiebers (48) in ihrer Breite und Länge im wesentlichen den entsprechenden Abmessungen der Stirnfläche des Balkens entspricht, daß der Verdrängungsschieber (48) auf der dem Formnest (24) zugewandten Seite eine der benachbarten Kante des Balkens entsprechende Kontur aufweist und mit seiner Stirnfläche geringfügig, höchstens um ein der Wandstärke des Formteils im Bereich der Randkante entsprechendes Maß über den Balken übersteht und dabei die Randkante zumindest teilweise übergreift.

**Claims**

1. Process for the manufacture of plastic moulded parts, whereby at least two reaction components are mixed in a liquid state, injected via a sprue channel (18) into a mould nest (24) of a moulding tool (12, 14) within a predetermined shot time, to react thereat for the purpose of hardening and/or foaming whilst forming a moulded part (25), and whereby a sprue portion, which has been formed in the sprue channel (18), is separated from the moulded part (25) at the end of the shot time, **characterised in that** a sprue film (21), which has been formed in a sprue gap (20), which connects the sprue channel (18) and the mould nest (24) and is laminarily flowed through, is displaced, prior to expiration of the starting time required from the start of mixing to the beginning of the reaction, from the sprue gap (20) whilst separating the material in the mould nest (24) from the sprue, and that further material is displaced from the reaction mixture and separated in the flow direction of the reaction mixture behind the sprue gap (20) after expiration of the shot time, but before expiration of the starting time.

2. Process according to claim 1, **characterised in that** the further material is displaced from the reaction mixture a short time after the displacement of the sprue film (21).

3. Process according to claim 1, **characterised in that** the further material is displaced simultaneously with the displacement of the sprue film (21) from the reaction mixture.

4. Process according to one of claims 1 to 3, **characterised in that** the reaction mixture is introduced into an overflow gap (42) on the side of the moulding tool (12,14) opposite the sprue gap (20) and, if appropriate, into an overflow chamber (44), and that the overflow film (43), which forms the further material and is located in the overflow gap (42), is separated from the moulded part (25) by way of material displacement from the overflow gap (42).

5. Process according to one of claims 1 to 4,

characterised in that the further material within the mould nest (24) is partially displaced whilst forming a moulded part passage (88).

6. Process according to one of claims 1 to 5, characterised in that the material in the sprue gap (20) and/or the further material in the mould nest (24) or the overflow gap (42) is displaced into a displacement chamber (90'), which is formed or opened at the time of the material displacement, and ejected therefrom after hardening.

7. Process according to claim 6, characterised in that the displacement chamber (90') is arranged in the immediate spatial vicinity of the region in which the material is being displaced.

8. Device for the manufacture of plastic moulded parts, in which at least two reaction components are mixed in a liquid state whilst forming a reaction mixture and injected via a sprue channel (18) into a mould nest (24) of a moulding tool comprising a top section (12) and a bottom section (14), and hardened thereat whilst forming the moulded part (25) and a sprue part, and in which in the region between the sprue channel (18) and the mould nest (24) is arranged a blocking element (26), which is displaceable in the top section and presses with its end surface against a separating wall (22) of the bottom section (14) and which serves to separate the sprue portion formed in the sprue channel (18) from the moulded part (25), characterised in that the blocking element is arranged to be a displacement slide (26), the end surface of which forms the one broadside surface of a narrow sprue gap (20), that the end surface of the displacement slide (26) corresponds in its width and length substantially with the respective dimensions of the end surface, which forms the other broadside surface of the sprue gap, of a separating wall which forms a limiting bar (22) for the reaction mixture, that downstream behind the limiting bar (22) in the top section (12) is arranged at least one further displacement slide (48, 80), which is displaceable transversely to a passage gap (42, 84) for the reaction mixture, and that the passage gap (42, 84) can be closed by displacement of the respective displacement slide (48, 80) against the opposite broadside surface of the passage gap whilst displacing material.

9. Device according to claim 8, characterised in that the displacement slide (48, 80), which defines the passage gap (42, 84), is hydraulically operated in synchronisation with the displacement slide (26) which defines the sprue gap (20).

10. Device according to claim 8, characterised in that the displacement slide (48, 80), which defines the passage gap (42, 84), is hydraulically controlled with a slight time delay relative to the displacement slide (26) which defines the sprue gap (20).

11. Device according to one of claims 8 to 10, characterised in that an overflow gap (42) is arranged on the side of the moulding tool opposite the sprue gap (20), and that the one broadside surface of the overflow gap (42) is formed by the end surface of displacement slide (48) which is displaceable transversely to the overflow gap towards the other broadside surface.

12. Device according to claim 11, characterised in that the overflow gap (42) is connected towards the outside to an overflow chamber (44).

13. Device according to one of claims 8 to 12, characterised in that inside the mould nest (24) is arranged at least one passage gap (84) for the reaction mixture (86), which gap is closeable by a further displacement slide (80) whilst forming a material passage (88) in the mould portion (24), in which respect the displacement slide (80) has a cross-sectional form corresponding with the outline of the material passage to be formed (88), as well as a broadside surface form (82), which corresponds with the surface form of the broadside surface, which is preferably located on the bottom section (14), of the passage gap (84).

14. Device according to one of claims 8 to 13, characterised in that a displacement chamber (90') for receiving the material (96) displaced by the displacement slide (26) is arranged in the region of the sprue gap (20) and/or the overflow gap (42) and/or the passage gap (84).

15. Device according to claim 14, characterised in that the displacement chamber (90'), which is preferably arranged in the bottom section (14), is open towards the respective gap (20) and has a receiving volume for the displaced material (96), which volume is adjustable by means of a piston (92) which is hydraulically operated synchronously with the displacement slide (26).

16. Device according to one of claims 8 to 15, **characterised in that** the sprue channel (18) and the limiting bar (22) are arranged below the separating plane of the moulded part (25) which is located in the mould nest (24), and that the sprue gap forms a flush plane with the moulded part contour in the region of the separating line (27).

17. Device according to one of claims 8 to 19, **characterised in that** the broadside surface of the sprue and/or overflow gap (42) located opposite the displacement slide (48) is arranged on a mould opening flap (46) which is hinged on the upper section (12).

18. Device according to one of claims 8 to 17, **characterised in that** the displacement slide (26) is arranged to also serve as a mould opening aid which is displaceable over the surface of the respective tool section.

19. Device according to one of claims 8 to 18, **characterised in that** an additional slide is provided to serve as a mould opening aid (52).

20. Device according to claim 19, **characterised in that** the mould-opening aid (52) arranged in the region of an undercut (40) slidingly abuts with a slide jaw (54) against the adjacent displacement slide (48).

21. Device according to one of claims 8 to 20, **characterised in that** the displacement slide (26, 48) is displaceable by means of a hydraulic cylinder (60), which is loaded with a hydraulic liquid via a preloaded pressure store (70) in order to assist fast movement.

22. Device according to one of claims 8 to 21, **characterised in that** the mould nest is intended for the production of a thin-walled boxshaped moulded part (25), the edge of which is placed during hardening in a separating plane (27) which is flush with the difining surface on the limiting bar, that the displacement slide (26) has on the side facing towards the mould nest a contour which corresponds with the adjacent edge of the limiting bar (22) and slightly protrudes with its end surface by no more than a dimension corresponding with the wall thickness of the moulded part in the region of the edge beyond the edge of the limiting bar whilst at least partially extending beyond the edge.

23. Device for the manufacture of plastic moulded parts, in which at least two reaction components are mixed in a liquid state whilst forming a reaction mixture and injected via a sprue channel (18) into a mould nest (24) of a moulding tool comprising a top section (12) and a bottom section (14), and hardened thereat whilst forming a moulded part (25) and a sprue portion, and in which is arranged in the area between the sprue channel (18) and the mould nest (24) a blocking element (26) for separating the sprue portion, which has been formed in the sprue channel (18) from the moulded part (25), which element is displaceable in the top section and pressed with its end surface against a separating wall (22), **characterised in that** the blocking element is arranged to be a displacement slide (26) which forms with its end surface the one limiting surface of a narrow sprue gap (20), that the end surface of the displacement slide (26) corresponds substantially in its width and length with the respective dimensions of the end surface of the separating wall which forms a limiting bar (22) for the reaction mixture, which end surface forms the other limiting surface of the sprue gap, that the mould nest is intended for the manufacture of a thin-walled boxshaped moulded part (25), the edge of which is located during hardening in a separating plane (27) which is flush with the limiting surface on the limiting bar, that the displacement slide (26) has on the side facing towards the mould nest a contour corresponding with the adjacent edge of the limiting bar (22) and protrudes with its end surface slightly by no more than the dimension corresponding with that of the wall thickness of the moulded part in the region of the edge, beyond the edge of the limiting bar, thereby at least partially protruding over the edge.

24. Device according to claim 22 or 23, **characterised in that** an overflow gap (42) is arranged on the side of the moulding tool opposite the sprue gap (20), that the one limiting surface of the overflow gap (42) is formed by the broadside surface of a bar arranged on one of the moulding tools, and that the other limiting surface of the overflow gap (42) is formed by the end surface of a displacement slide (48) which is displaceable transversely to the overflow gap towards the first limiting surface, that the end surface of the displacement slide (48) in its width and length substantially corresponds with the respective dimensions of the end surface of the bar, that the displacement slide (48) has on the side facing the mould nest (24) a contour corresponding with the adjacent edge of the bar and that it protrudes beyond the bar by no more than a dimension corresponding with the wall thickness of the moulded part in the region of the edge, thereby at least partially extending beyond the edge.

**Revendications**

1. Procédé pour la fabrication d'objets moulés en matière plastique, dans lequel au moins deux composants pouvant réagir entre eux, mélangés à l'état liquide, sont injectés, en passant par un canal de carotte (18), dans une empreinte (24) d'un moule (12, 14) en un temps d'injection préétabli et y sont amenés, à des fins de durcissement et/ou d'expansion, à réagir de façon à former la pièce moulée (25), et dans lequel une partie formant carotte formée dans le canal de carotte (18) est séparée de la pièce moulée (25) à l'issue du temps d'injection, caractérisé en ce qu'une pellicule d'entrée (21), formée dans une fente d'entrée (20) reliant le canal de carotte (18) à l'empreinte (24) et par laquelle passe un courant à écoulement laminaire, est expulsée, encore avant la fin du temps de mise en route qu'il faut à partir du moment du processus de mélange jusqu'au début de la réaction, hors de la fente d'entrée (20) de façon à séparer la matière se trouvant dans l'empreinte (24) de la carotte et en ce que, dans le sens d'écoulement du mélange réactionnel, derrière la fente d'entrée (20) une autre quantité de matière est expulsée du mélange réactionnel et séparée à l'issue du temps d'injection mais encore avant la fin du temps de mise en route.

2. Procédé selon la revendication 1, caractérisé en ce que l'autre quantité de matière est expulsée du mélange réactionnel peu après le déplacement de la pellicule d'entrée (21).

3. Procédé selon la revendication 1, caractérisé en ce que l'autre quantité de matière est expulsée du mélangé réactionnel simultanément avec le déplacement de la pellicule d'entrée (21).

4. Procédé selon l'une quelconque des revendications précédentes, caractérisé en ce que, du côté du moule (12, 14) opposé à la fente d'entrée (20), le mélange réactionnel est dirigé dans une fente de trop-plein (42) et éventuellement dans une chambre de trop-plein (44) et en ce que la pellicule de trop-plein (43) se trouvant dans la fente de trop-plein (42) et formant ladite autre quantité de matière est séparée de la pièce moulée (25) par déplacement de matière hors de la fente de trop-plein (42).

5. Procédé selon l'une quelconque des revendications précédentes, caractérisé en ce que l'autre quantité de matière à l'intérieur de l'empreinte (24) est partiellement déplacée de façon à former une ouverture (88) dans la pièce moulée.

6. Procédé selon l'une quelconque des revendications précédentes, caractérisé en ce que la matière provenant de la fente d'entrée (20) et/ou l'autre quantité de matière provenant de l'empreinte (24) ou de la fente de trop-plein (42) sont refoulées dans une chambre d'expulsion (90') se formant ou s'ouvrant au moment du déplacement de matière et sont éjectées hors de celle-ci après le durcissement.

7. Procédé selon la revendication 6, caractérisé en ce que la chambre d'expulsion (90') est disposée au voisinage immédiat de la région dans laquelle la matière est déplacée.

8. Dispositif pour la fabrication d'objets moulés en matière plastique, dans lequel au moins deux composants pouvant réagir entre eux peuvent être mélangés à l'état liquide de façon à former un mélange réactionnel et peuvent être injectés, en passant par un canal de carotte (18), dans une empreinte (24) d'un moule constitué par un demi-moule supérieur (12) et un demi-moule inférieur (14) et y être durcis de façon à former la pièce moulée (25) et une pièce formant carotte, et dans lequel est disposé dans la région entre le canal de carotte (18) et l'empreinte (24) un organe d'arrêt (26) qui, monté coulissant dans le demi-moule supérieur et pouvant être poussé avec sa face frontale contre une paroi de séparation (22) du demi-moule inférieur (14), est destiné à séparer la partie formant carotte formée dans le canal de carotte (18) de la pièce moulée (25), caractérisé en ce que l'organe d'arrêt est réalisé sous la forme d'un coulisseau déplaceur (26) formant avec sa face frontale la surface de l'un des côtés plats d'une étroite fente d'entrée (20) et en ce que la face frontale du coulisseau déplaceur (26) correspond dans ses largeur et longueur sensiblement aux dimensions correspondantes de la face frontale, formant la surface de l'autre côté plat de la fente d'entrée, de la paroi de séparation constituant une barre de retenue (22) pour le mélange réactionnel, en ce que, dans le sens d'écoulement, derrière la barre de retenue (22) est disposé dans le demi-moule supérieur (12) au moins un autre coulisseau déplaceur (48, 80) susceptible de coulisser transversalement à une fente de passage (42, 84) pour le mélange réactionnel, et en ce que la fente de passage (42, 84) peut être fermée, de façon à déplacer de la matière, en amenant le coulisseau déplaceur concerné (48, 80) contre la surface du côté plat opposé de la fente de passage.

9. Dispositif selon la revendication 8, caractérisé en ce que le coulisseau déplaceur (48, 80) limitant la fente de passage (42, 84) peut être commandé par voie hydraulique en synchronisme avec le coulisseau déplaceur (26) limitant la fente d'entrée (20).

10. Dispositif selon la revendication 8, caractérisé en ce que le coulisseau déplaceur (48, 80) limitant la fente de passage (42, 84) peut être commandé par voie hydraulique avec un léger retard par rapport au coulisseau déplaceur (26) limitant la fente d'entrée (20).

11. Dispositif selon l'une quelconque des revendications 8 à 10, caractérisé en ce que du côté du moule opposé à la fente d'entrée (20) est disposée une fente de trop-plein (42) et en ce que la surface de l'un des côtés plats de la fente de trop-plein (42) est formée par la face frontale d'un coulisseau déplaceur (48) susceptible d'être amené, en coulissant transversalement à la fente de tropplein, contre la surface de l'autre côté plat.

12. Dispositif selon la revendication 11, caractérisé en ce que la fente de trop-plein (42) communique vers l'extérieur avec une chambre de tropplein (44).

13. Dispositif selon l'une quelconque des revendications 8 à 12, caractérisé en ce qu'à l'intérieur de l'empreinte (24) du moule est disposée au moins une fente de passage (84) destinée au mélange réactionnel (86) et pouvant être fermée par un autre coulisseau déplaceur (80) de manière à former une ouverture (88) dans la matière constitutive de la pièce moulée (25), le coulisseau déplaceur (80) présentant une forme de section correspondant au contour de l'ouverture (88) à ménager dans la matière, ainsi qu'une face frontale (82) d'une forme correspondant à celle de la surface du côté plat de la fente de passage (84) situé de préférence sur le demi-moule inférieur (14).

14. Dispositif selon l'une quelconque des revendications 8 à 13, caractérisé en ce que dans la région de la fente d'entrée (20) et/ou de la fente de trop-plein (42) et/ou de la fente de passage (84) est disposée une chambre d'expulsion (90') destinée à recevoir la matière (96) déplacée par le coulisseau déplaceur (26).

15. Dispositif selon la revendication 14, caractérisé en ce que la chambre d'expulsion (90') de préférence disposée dans le demi-moule inférieur (14) est ouverte en direction de la fente concernée (20) et présente un volume apte à recevoir la matière déplacée (96) qui est variable par un piston (92) pouvant être actionné par voie hydraulique en synchronisme avec le coulisseau déplaceur (26).

16. Dispositif selon l'une quelconque des revendications 8 à 15, caractérisé en ce que le canal de carotte (18) et la barre de retenue (22) sont disposés au-dessous du plan de séparation de la pièce moulée (25) se trouvant dans l'empreinte (24) et en ce que la fente d'entrée forme un plan qui au niveau de la ligne de séparation (27) est aligné sur le contour de la pièce moulée.

17. Dispositif selon l'une quelconque des revendications 8 à 16, caractérisé en ce que la surface du côté plat de la fente d'entrée et/ou de la fente de trop-plein (42) situé en regard du coulisseau déplaceur (48) est disposée sur un volet de démoulage (46) relié de manière articulée au demi-moule supérieur (12).

18. Dispositif selon l'une quelconque des revendications 8 à 17, caractérisé en ce que le coulisseau déplaceur (26) est réalisé en même temps comme moyen auxiliaire de démoulage pouvant coulisser au-delà de la surface du demi-moule concerné.

19. Dispositif selon l'une quelconque des revendications 8 à 18, caractérisé en ce qu'il est en outre prévu un coulisseau servant de moyen auxiliaire de démoulage (52).

20. Dispositif selon la revendication 19, caractérisé en ce que le moyen auxiliaire de démoulage (52) disposé dans la région d'une partie en contre-dépouille (40) prend appui avec une mâchoire à glissement (54) contre le coulisseau déplaceur avoisinant (48) de façon à pouvoir glisser.

21. Dispositif selon l'une quelconque des revendications 8 à 20, caractérisé en ce que le coulisseau déplaceur (26, 48) peut coulisser sous l'action d'un vérin hydraulique (60) qui, afin de contribuer à un déroulement rapide du mouvement, peut être commandé avec du liquide hydraulique par l'intermédiaire d'un accumulateur de pression (70) soumis à une tension initiale.

22. Dispositif selon l'une quelconque des revendications 8 à 21, caractérisé en ce que l'empreinte est destinée à la fabrication d'une pièce moulée à paroi mince (25) en forme de boite, dont le bord marginal se trouve durant le durcissement dans un plan de séparation (27) aligné sur la face limite côté barre de retenue, en ce que le coulisseau déplaceur (26) présente, du côté de l'empreinte, un contour correspondant au bord avoisinant de la barre de retenue (22) et fait saillie avec sa face frontale légèrement, c'est-à-dire au maximum d'une quantité correspondant à l'épaisseur de paroi de la pièce moulée au niveau du bord marginal, au-delà du bord de la barre de retenue et s'engage ainsi tout au moins partiellement sur le bord marginal.

23. Dispositif pour la fabrication de pièces moulées en matière plastique, dans lequel au moins deux composants aptes à réagir entre eux peuvent, à l'état liquide, être mélangés de façon à former un mélange réactionnel et peuvent être injectés, en passant par un canal de carotte (18), dans une empreinte (24) d'un moule constitué par un demi-moule supérieur (12) et un demi-moule inférieur (14) et y être durcis de façon à former la pièce moulée (25) et une partie formant carotte, et dans lequel est disposé, dans la région entre le canal de carotte (18) et l'empreinte (24), un organe d'arrêt (26) qui, monté coulissant dans le demi-moule supérieur et pouvant être appuyé avec sa face frontale contre une paroi de séparation (22), est destiné à séparer la partie formant carotte formée dans le canal de carotte (18) de la pièce moulée (25), caractérisé en ce que l'organe d'arrêt est réalisé sous la forme d'un coulisseau déplaceur (26) formant avec sa face frontale l'une des surfaces limitant une étroite fente d'entrée (20), en ce que la face frontale du coulisseau déplaceur (26) correspond dans ses largeur et longueur sensiblement aux dimensions correspondantes de la face frontale, formant l'autre surface limitant la fente d'entrée, de la paroi de séparation constituant une barre de retenue (22) pour le mélange réactionnel, en ce que l'empreinte est destinée à la fabrication d'une pièce moulée à paroi mince (25) en forme de boîte dont le bord marginal se trouve, au cours du durcissement, dans un plan de séparation (27) aligné sur la surface limite côté barre de retenue, en ce que le coulisseau déplaceur (26) présente, du côté de l'empreinte, un contour correspondant au bord avoisinant de la barre de retenue (22) et fait avec sa face frontale saillie légèrement, c'est-à-dire au maximum de la quantité correspondant à l'épaisseur de paroi de la pièce moulée au niveau du bord marginal, au-delà du bord de la barre de retenue et s'engage ainsi au moins partiellement sur le bord marginal.

24. Dispositif selon la revendication 22 ou 23, caractérisé en ce que du côté du moule opposé à la fente d'entrée (20) est disposée une fente de trop-plein (42), en ce que l'une des surfaces limites de la fente de trop-plein (42) est formée par la surface d'un côté plat d'une barre montée sur l'un des demi-moules, et en ce que l'autre surface limite de la fente de trop-plein (42) est formée par la face frontale d'un coulisseau déplaceur (48) susceptible d'être amené, en coulissant transversalement à la fente de trop-plein, contre la première surface limite, en ce que la face frontale du coulisseau déplaceur (48) correspond dans ses largeur et longueur sensiblement aux dimensions correspondantes de la face frontale de la barre, en ce que le coulisseau déplaceur (48) présente, du côté de l'empreinte (24) un contour correspondant au bord avoisinant de la barre et fait avec sa face frontale saillie légèrement, au maximum d'une quantité correspondant à l'épaisseur de paroi de la pièce moulée dans la région du bord marginal, au-delà de la barre et s'engage ainsi, tout au moins partiellement, sur le bord marginal.

Fig. 1

Fig. 2a

Fig. 2b

Fig. 2c

EP 0 240 753 B1

*Fig.3*

Fig. 4

Fig.5

Fig. 6

Fig. 7a

Fig. 7b

Fig. 8

EP 0 240 753 B1

Fig. 9b

Fig. 9a